# EUROPEAN PATENT APPLICATION

(11) **EP 4 629 165 A1**
(43) Date of publication of application: **08.10.2025**
(21) Application number: 25163565.2
(22) Date of filing: 13.03.2025
(51) Int. Cl.: G06T 3/4038

(54) **IMAGE PROCESSING APPARATUS, IMAGE PROCESSING METHOD, AND STORAGE MEDIUM**

(30) Priority: 01.04.2024 JP 2024058838
(71) Applicant: CANON KABUSHIKI KAISHA, Tokyo 146-8501 (JP)
(72) Inventor: MORI, Makiko, Tokyo, 146-8501 (JP)
(74) Representative: Canon Europe Limited

(57) **Abstract**

An image processing apparatus includes: a virtual viewpoint image generation unit configured to generate a virtual viewpoint image on the basis of a plurality of captured images from a plurality of imaging units mounted on a movable apparatus; and a specification unit configured to specify, as a projecting region, a region where a structure projecting from the movable apparatus has been imaged in the captured images, the virtual viewpoint image generation unit is configured to generate the virtual viewpoint image such that the projecting region specified by the specification unit is not included.

(Figure 6A)

## Description

### BACKGROUND OF THE INVENTION

### Field of the Invention

The present invention relates to an image processing apparatus, an image processing method, and a storage medium.

### Description of the Related Art

In recent years, image processing systems that display images of the surroundings of vehicles seen from virtual viewpoints on the basis of images captured by a plurality of cameras mounted in the vehicles have been proposed. Japanese Patent Laid-Open No. 2021-118435 discloses a system that generates a virtual viewpoint image showing the surroundings of a vehicle seen from a virtual viewpoint on the basis of captured images captured by cameras installed at front, rear, left, and right portions of the vehicle and displays the virtual viewpoint image on a display device.

Also, in Japanese Patent Laid-Open No. 2021-118435, a body of a host vehicle is prevented from being erroneously recognized as an obstacle by adjusting a region of a mask hiding the host vehicle that appears in a captured image and superimposing the mask in a virtual viewpoint image.

On the other hand, auxiliary mirrors and the like for checking blind spots are installed in vans, trucks, and the like with larger sizes than passenger cars and are used together with camera systems. Since mirror installation positions are determined by relationships between driver's seats and blind spots, the mirrors are installed at positions at which the mirrors project from the host vehicles in many cases.

On the other hand, camera installation positions are determined by imaging target ranges, and the camera installation positions are preferably located at high positions in order to suitably image larger road surfaces. Therefore, projecting structures of the host vehicles such as mirrors appear in camera imaging ranges.

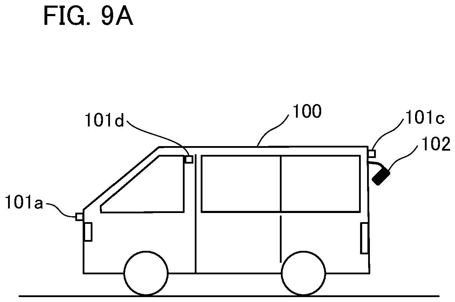

A problem in the related art will be described with reference to Figs. 9A to 9D. Fig. 9A is a side view of a vehicle for explaining the problem in the related art and illustrates a side view of a van 100. Cameras 101a to 101d (101b is not illustrated because 101b is disposed on a side surface of an opposite side) are installed on the front, rear, left and right sides of the van 100, and a projecting auxiliary mirror 102 is installed on the rear side.

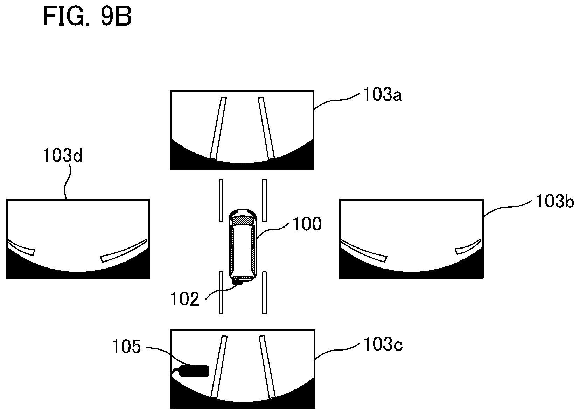

Fig. 9B is a top view of the vehicle for explaining the problem in the related art and illustrates a top view of the van 100 and an example of images 103a to 103d captured by the cameras 101a to 101d. In the image 103c captured by the camera 101c as a rear camera, the auxiliary mirror 102 is imaged as an image 105.

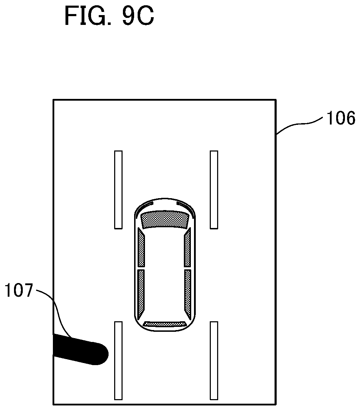

Fig. 9C is a diagram illustrating an example of a virtual viewpoint image for explaining the problem in the related art and illustrates a virtual viewpoint image 106 obtained by synthesizing the images 103a to 103d from a virtual viewpoint in the top view. In a case where a typical planar or bowl-shaped projection surface is used to generate the virtual viewpoint image, the auxiliary mirror 102 which is an object projecting from the van 100 is synthesized at a position separated from the host vehicle in the generated virtual viewpoint image.

The reference sign 107 denotes a synthesized image of the auxiliary mirror 102. There is a concern that when a driver views the virtual viewpoint image 106, the driver may erroneously recognize 107 as an obstacle.

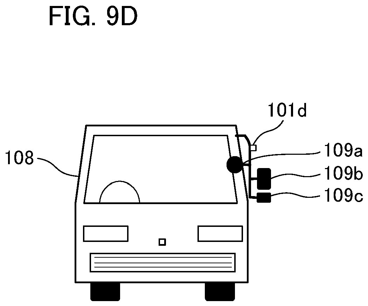

Fig. 9D illustrates a front view of a vehicle for explaining the problem in the related art and illustrates, for example, a front view of a truck 108. A camera 101d and mirrors 109a to 109c to check blind spots are installed at positions projecting from the truck on a left side surface of the truck 108 on a side opposite to a driver's seat. Images of the mirrors 109a to 109c are similarly synthesized at positions separated from the host vehicle in a synthesized virtual viewpoint image in this case as well, and there is a concern that a driver may erroneously recognize them as obstacles.

### SUMMARY OF THE INVENTION

An image processing apparatus includes: a virtual viewpoint image generation unit configured to generate a virtual viewpoint image on the basis of a plurality of captured images from a plurality of imaging units configured to be mounted in a movable apparatus; and a specification unit configured to specify, as a projecting region, a region where a structure projecting from the movable apparatus has been imaged in the captured images, the virtual viewpoint image generation unit generating the virtual viewpoint image such that the projecting region specified by the specification unit is not included.

Further features of the present invention will become apparent from the following description of embodiments with reference to the attached drawings.

### BRIEF DESCRIPTION OF THE DRAWINGS

Fig. 1 is a diagram for explaining an example of a positional relationship of a vehicle 1 and camera units 11 to 14 according to a first embodiment.
Fig. 2 is a functional block diagram for explaining a configuration example of an image processing system 20 according to the first embodiment.
Fig. 3 is a flowchart for explaining a processing flow in an image processing method performed by an integrated processing unit 21 according to the first embodiment.
Fig. 4 is a flowchart for explaining a processing example in Step S32 to specify an image region where a structure of a host vehicle appears.
Fig. 5A is a diagram illustrating an example of a camera selection screen 51.
Fig. 5B is a diagram illustrating an example of a region editing screen 55a in Step S43.
Fig. 5C is a diagram illustrating an example of a region addition screen 56 in Step S45.
Fig. 5D is a diagram illustrating an example of a region addition screen 56b in a state where a partial region 58a in a camera image 52d has been designated.
Fig. 5E is a diagram illustrating an example of a region editing screen 55b when the processing has returned to Step S43 by a user selecting an added region fixing button 54e in Fig. 5D.
Fig. 5F is a diagram illustrating an example of a region deletion screen 59a.
Fig. 5G is a diagram illustrating an example of a region deletion screen 59b in a state where a part of designated region has been selected by the user operating an operation unit 28.
Fig. 6A is a diagram for explaining a synthesis processing example in a case where a top view image is generated as a virtual viewpoint image.
Fig. 6B is a diagram illustrating an example of virtual viewpoint synthesis parameters according to the first embodiment.
Fig. 6C is a diagram illustrating an example in which virtual viewpoint synthesis parameters for using a surrounding region 64g avoiding a host vehicle structure region 62 in Fig. 6A as a blended region and not using the host vehicle structure region 62 as the blended region are generated.
Fig. 6D is a diagram illustrating an example in which virtual viewpoint synthesis parameters for leaving a boundary of the blended region as a straight line and not using the host vehicle structure region 62 are generated.
Fig. 6E is a diagram illustrating an example of a virtual viewpoint image 66 generated by an OSD superimposition unit 24.
Fig. 7 is a flowchart for explaining a processing example of specifying an image region where a host vehicle structure appears according to a second embodiment.
Fig. 8A is a diagram illustrating an example of automatic setting screen 81 according to the second embodiment.
Fig. 8B is a diagram illustrating an example of virtual viewpoint conversion parameters in a top view corresponding to a front camera unit 11.
Fig. 8C is a diagram illustrating a top view of a vehicle 1 and images 85a to 85d after images corresponding to camera units 11 to 14 are subjected to image processing.
Fig. 8D is a diagram illustrating an example of virtual viewpoint images 88a to 88d that an image synthesis unit 23 has generated from the images 85a to 85d after the image processing on the basis of the virtual viewpoint conversion parameters set in Step S73 and has stored in a memory 25.
Fig. 8E is a diagram illustrating an example of a host vehicle structure region checking screen 90 displayed in Step S76.
Fig. 9A is a side view of a vehicle for explaining a problem in the related art.
Fig. 9B is a top view of the vehicle for explaining the problem in the related art.
Fig. 9C is a diagram illustrating an example of a virtual viewpoint image for explaining the problem in the related art.
Fig. 9D is a front view of a vehicle for explaining the problem in the related art.

### DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

### <First Embodiment>

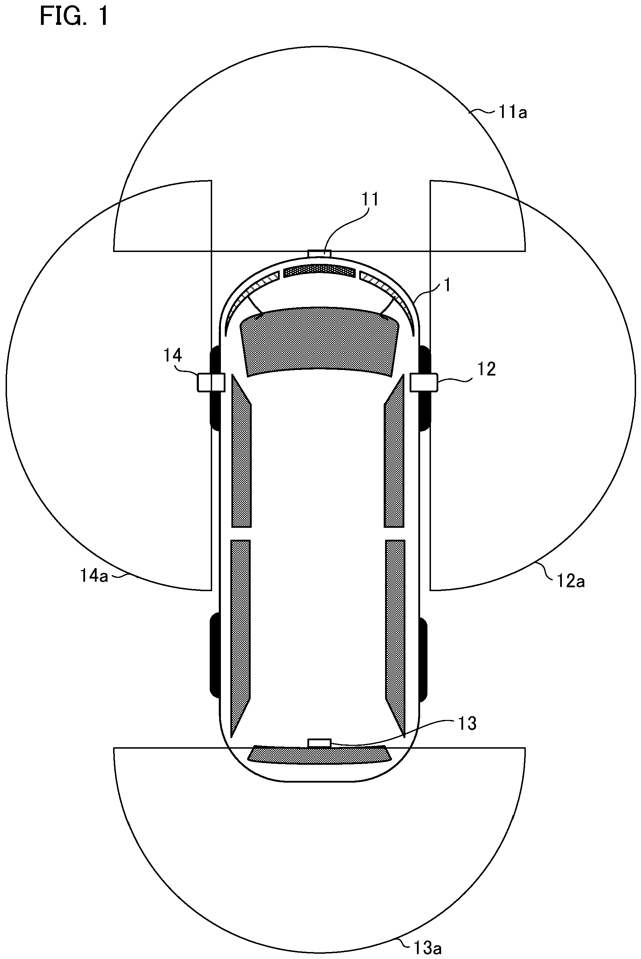

Fig. 1 is a diagram for explaining an example of a positional relationship of a vehicle 1 and camera units 11 to 14 according to a first embodiment. The vehicle 1 is a movable apparatus such as an automobile, for example, and the camera units 11 to 14 function as imaging units that output captured images.

In other words, a plurality of imaging units that output a plurality of captured images are mounted in the vehicle 1 as a movable apparatus in the first embodiment. Note that the movable apparatus may be any movable apparatus as long as it is movable, such as an automobile, a train, a ship, an aircraft, a robot, or a drone, for example.

In the first embodiment, the camera units 11, 12, 13, and 14 are installed on the front side, the right side, the rear side, and the left side of the vehicle 1 as the movable apparatus, respectively, as illustrated in Fig. 1. Note that although an image processing system in the first embodiment includes the four camera units, the number of camera units that the image processing system includes is not limited to four.

The image processing system in the present embodiment may be any image processing system that generates a virtual viewpoint image using images from two or more camera units.

Note that the camera units 11 to 14 are installed to have the sides to the front, the right, the left, and the right of the vehicle 1 that is the movable apparatus as predetermined imaging ranges, respectively. Also, each of the camera units 11 to 14 has substantially similar components. For example, each of the camera units 11 to 14 has an imaging element that captures an optical image and an optical system that generates the optical image on a light receiving surface of the imaging element.

The optical system that each of the camera units 11 to 14 includes is configured to be able to obtain a captured image at an angle that is as wide as about 180 degrees in the horizontal direction. Note that in Fig. 1, 11a to 14a indicate captured image angles that can be imaged by the camera units 11 to 14. Note that properties such as captured image angles, the numbers of pixels, and the like of the camera units 11 to 14 may be different.

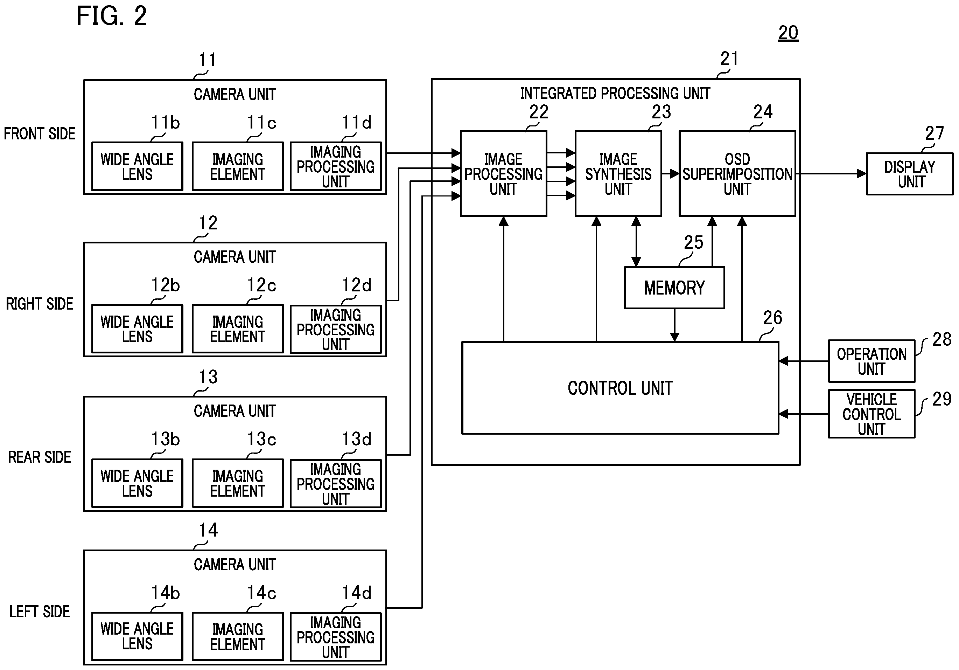

Next, Fig. 2 is a functional block diagram for explaining a configuration example of an image processing system 20 according to the first embodiment, and the image processing system 20 in the first embodiment will be described with reference to Fig. 2.

Note that some of the functional blocks illustrated in Fig. 2 are realized by causing a CPU or the like as a computer, which is included in the image processing system or the camera units and is not illustrated, to execute a computer program stored in a memory as a storage medium, which is not illustrated.

However, some or all of the functional blocks may be realized by hardware. As the hardware, it is possible to use an application specific integrated circuit (ASIC), a processor (a reconfigurable processor or a DSP), or the like.

Also, each functional block illustrated in Fig. 2 may not be incorporated in the same casing and may be configured by a different device connected thereto via a signal path. Also, an integrated processing unit 21, a display unit 27, and an operation unit 28, for example, may not be mounted in the vehicle as the movable apparatus and may be provided in an external terminal for remotely controlling the movable apparatus, for example.

In Fig. 2, the image processing system 20 is mounted in the vehicle 1. The camera unit 11 installed on the front side includes a wide angle lens 11b, an imaging element 11c, and an imaging processing unit 11d. The same applies to the camera units 12 to 14 installed on the lateral sides and the rear side.

Each of the imaging elements 11c to 14c includes, for example, a CMOS image sensor or a CCD image sensor. Each of the wide angle lenses 11b to 14b as an optical system is configured of one or more optical lenses and generates an optical image on a receiving surface of each of the corresponding imaging elements 11c to 14c.

Each of the imaging elements 11c to 14c performs photoelectric conversion on the optical image and outputs imaging data. RGB color filters, for example, are aligned for each pixel on each of the light receiving surfaces of the imaging elements 11c to 14c.

An RGB layout is, for example, a Bayer layout. Therefore, each of the imaging elements 11c to 14c is configured to output pixel data of R, G, R, and G in order from a predetermined row and output pixel data of G, B, G, and B in order from the next row, for example, in accordance with the Bayer layout.

The imaging processing units 11d to 14d perform image processing on the imaging data output from the corresponding imaging elements 11c to 14c, respectively, and transmit the imaging data to the integrated processing unit 21. For example, the imaging processing units 11d to 14d process the image data input by the corresponding imaging elements 11c to 14c in accordance with the Bayer layout and convert the image data into an image data format to transmit the image data to the integrated processing unit 21.

Each of the imaging processing units 11d to 14d may perform debayer processing, white balance adjustment, gain offset adjustment, gamma processing, color matrix processing, reversible compression processing, and the like. Note that a part or all of the processing of the imaging processing units 11d to 14d may be performed by signal processing units provided in semiconductors stacked in the imaging elements 11c to 14c.

Also, a part or all of the processing of the imaging processing units 11d to 14d may not be performed inside the camera units and may be performed by the image processing units in the integrated processing unit 21. Parameters for the image processing are stored in ROMs, which are provided in the camera units and are not illustrated, and are set at the time of activation. Note that a configuration in which the parameters for the image processing can be set from the integrated processing unit 21 may be adopted.

The integrated processing unit 21 includes an image processing unit 22, an image synthesis unit 23, an OSD superimposition unit 24, a memory 25, a control unit 26, and the like and functions as an image processing apparatus. Note that in the first embodiment, the integrated processing unit 21 is accommodated in a casing that is different from those of the camera units. OSD is an abbreviation of an on screen display.

The image processing unit 22 acquires captured image data from each of the imaging processing units 11d to 14d and performs image processing on the acquired captured image data. Specifically, the image processing unit 22 performs processing that has not been performed by the imaging processing units 11d to 14d from among debayer processing, white balance adjustment, gain offset adjustment, gamma processing, color matrix processing, and the like.

In a case where the imaging processing units 11d to 14d have performed reversible compression processing, the image processing unit 22 performs decompression processing thereof. Parameters for the image processing performed by the image processing unit 22 are set in the image processing unit 22 by the control unit 26 on the basis of camera information acquired by the control unit 26 from the memory 25.

The aforementioned camera information is information regarding each of the camera units 11 to 14 and is stored in the memory 25 in advance. The aforementioned camera information includes at least some of the numbers of pixels of the imaging elements 11c to 14c, pixel layout information, photoelectric conversion properties, γ properties, sensitivity properties, and image data format information.

The image processing unit 22 performs image processing corresponding to each of the camera units 1 1 to 14 on the basis of the aforementioned camera information. The image synthesis unit 23 receives an input of the images after the image processing from the image processing unit 22, synthesizes the images, and generates a virtual viewpoint image. Here, the image synthesis unit 23 functions as a virtual viewpoint image generation unit that generates a virtual viewpoint image on the basis of the plurality of captured images from the plurality of imaging units mounted in the movable apparatus.

Parameters for the synthesis processing performed by the image synthesis unit 23 are set in the image synthesis unit 23 by the control unit 26 on the basis of camera information acquired from the memory 25, operation information acquired from the operation unit 28, and host vehicle information acquired from the vehicle control unit 29 by the control unit 26.

Note that the aforementioned camera information includes at least some of optical properties of the wide angle lenses 11b to 14b and installation position coordinates and posture information of the camera units 11 to 14 in a vehicle coordinate system. Note that a configuration in which the camera information is stored in the ROM, which are not illustrated, in the camera units and is read by the control unit 26 may be adopted.

As a method of generating the virtual viewpoint image, a known method is used. In other words, images after the image processing corresponding to each of the camera units 11 to 14 are projected to a planar or bowl-shaped projection surface with reference to the optical properties of the wide angle lenses 11b to 14b. Then, the virtual viewpoint position is determined on the basis of the operation information and the host vehicle information to thereby generate the virtual viewpoint image.

The OSD superimposition unit 24 receives an input of the virtual viewpoint image from the image synthesis unit 23, superimposes icon, CG, letters, or the like indicating the host vehicle, and generates a superimposed image. As parameters for the superimposition processing, an ID such as an icon and superimposition coordinates on the image are set in the OSD superimposition unit 24 by the control unit 26 in accordance with the virtual viewpoint position determined by the control unit 26 on the basis of the operation information and the host vehicle information.

Image data corresponding to the ID such as an icon is stored in the memory 25. Also, a name of the virtual viewpoint view may be displayed in a superimposed manner when a virtual viewpoint is switched.

The memory 25 stores a computer program that a CPU as a computer in the control unit 26 executes, camera information of each of the camera units 11 to 14, and installation coordinates and posture information of the camera units 11 to 14 in the vehicle coordinate system. Furthermore, the memory 25 may also store image data such as an icon that the OSD superimposition unit 24 refers to.

The control unit 26 can read the information in the memory 25. Moreover, the memory 25 also functions as a frame memory and a work memory for the image synthesis unit 23 to synthesize the virtual viewpoint image. The CPU in the control unit 26 performs various kinds of control on the entire image processing system 20 by executing the computer program stored in the memory 25.

The display unit 27 is a display installed at a location where the driver can easily view the display, receives an input of the superimposed image from the OSD superimposition unit 24, and displays the superimposed image. In this manner, the driver can view a surrounding situation adapted to the situation of the host vehicle as the virtual viewpoint image with the icon of the host vehicle. A display of a car navigation system also serves as the display unit 27.

The operation unit 28 is operated in a case where the driver switches the virtual viewpoint or the like, and notifies the control unit 26 of content of the operation. Note that the operation unit 28 may also serve as the display unit 27 by including a touch panel, an operation button, or the like in the display unit 27.

The vehicle control unit 29 notifies the control unit 26 of a vehicle state. The vehicle state includes information such as a shift lever state, a blinker state, and a traveling speed. Note that the vehicle control unit 29 may control a speed, a direction, and the like of the vehicle as the movable apparatus in accordance with information (such as distances, directions, positions, and speeds) of objects and obstacles recognized in images by the control unit 26.

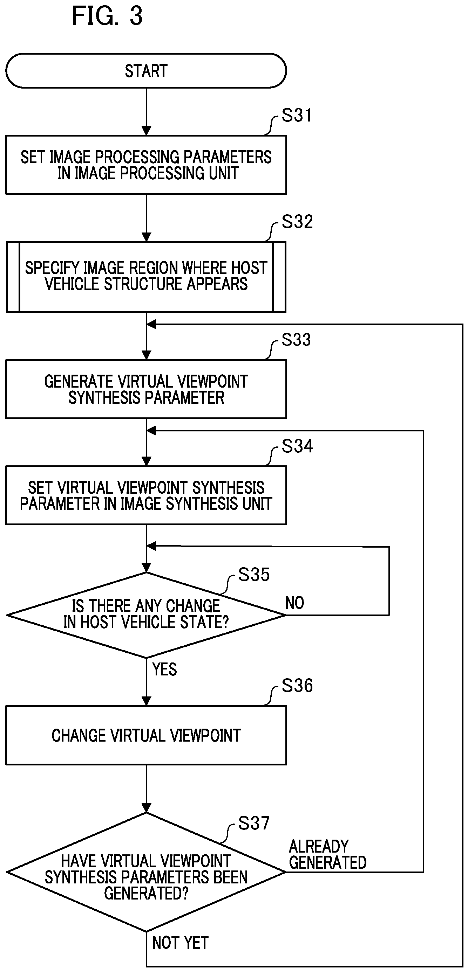

Fig. 3 is a flowchart for explaining a processing flow of an image processing method performed by the integrated processing unit 21 according to the first embodiment. Note that an operation in each step in the flowchart in Fig. 3 is performed in order by the CPU or the like as a computer in the control unit 26 executing the computer program stored in the memory.

The processing flow in Fig. 3 is executed by the control unit 26 in the integrated processing unit 21 when the image processing system 20 is activated.

In Step S31, the control unit 26 acquires camera information of each of the camera units 11 to 14 from the memory 25 and sets, in the image processing unit, image processing parameters to be performed by the image processing unit 22 on the basis of the camera information.

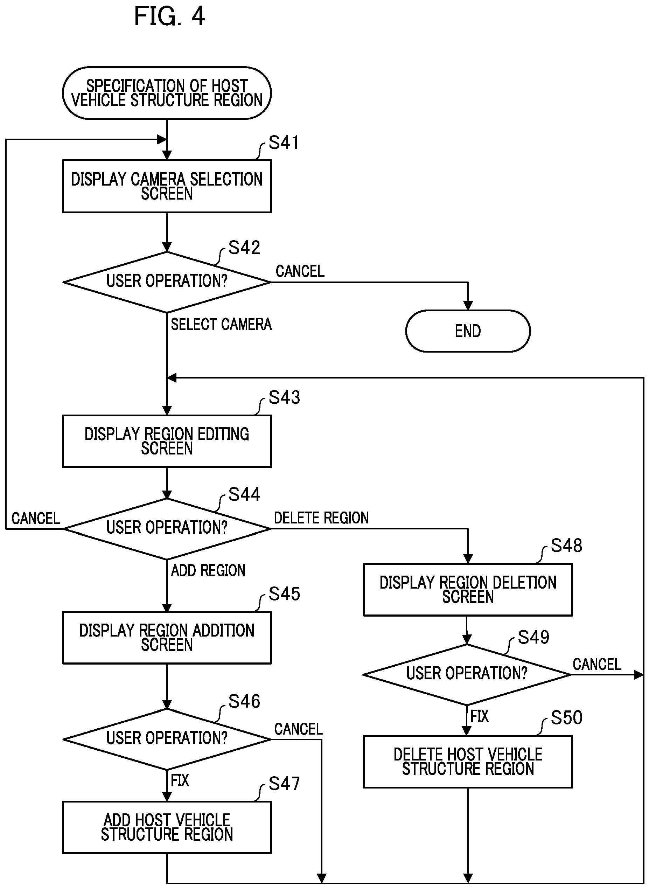

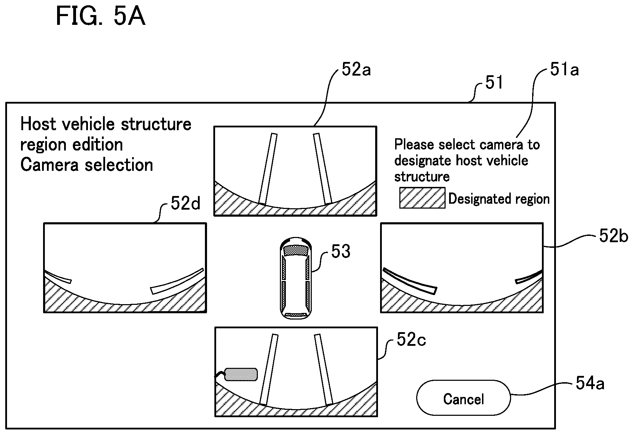

In Step S32, the control unit 26 functions as a specification unit and specifies an image region where a structure projecting from the movable apparatus appears on the basis of the image after image processing corresponding to each of the camera units 11 to 14. Here, Step S32 functions as a specification step of specifying, as a projecting region, a region where the structure projecting from the movable apparatus has been imaged in the captured images. A detailed example of the processing in Step S32 will be described using Figs. 4 and 5A to 5G.

Fig. 4 is a flowchart for explaining a processing example of Step S32 to specify the image region where a host vehicle structure appears, and Figs. 5A to 5g are diagrams each illustrating an example of a UI for processing of specifying the image region where the host vehicle structure appears according to the first embodiment.

Note that an operation in each step in the flowchart in Fig. 4 is performed in order by the CPU or the like as a computer in the control unit 26 executing the computer program stored in the memory.

In Step S41 in Fig. 4, the control unit 26 displays a camera selection screen on the display unit 27 by setting parameters in the image synthesis unit 23 and the OSD superimposition unit 24. Fig. 5A is a diagram illustrating an example of the camera selection screen 51.

In Fig. 5A, 51 denotes the camera selection screen displayed on the display unit 27. The reference signs 52a to 52d are images obtained by resizing the images after the image processing corresponding to the camera units 11 to 14 and are arranged on the front, right, rear, and left sides of the host vehicle icon 53 in accordance with disposition of the camera units 11 to 14, respectively.

Image disposition processing is performed by the image synthesis unit 23 in response to an instruction from the control unit 26. Also, an operation guide 51a and a cancel button 54a are arranged in the camera selection screen 51. Depiction processing of the host vehicle icon 53, the operation guide 51a, and the cancel button 54a is performed by the OSD superimposition unit 24 in response to an instruction from the control unit 26.

In regard to parts of the body of the host vehicle appearing in the images, image regions where the host vehicle structures appear are set as "designated regions" in a vehicle structure region list, which will be described later, in the memory, which is not illustrated, at the time of shipping from the manufacturer, for example, in Fig. 5A.

In Fig. 5A, the "designated regions" are displayed with hatching. Note that the aforementioned designated region may be displayed in a semi-transparent manner instead of the hatching such that the user can visually recognize what appears in the aforementioned designated regions. A rear mirror as a projecting host vehicle structure appears in the camera image 52c of the camera unit 13 as a rear camera.

In Step S42 in Fig. 4, the control unit 26 receives an operation, if any, performed by the user on the operation unit 28 and determines content of the operation. If it is determined in Step S42 that the user has operated the operation unit 28 and has selected any of the camera images 52a to 52d to designate a host vehicle structure, the processing moves on to Step S43.

If it is determined in Step S42 that the user has selected the cancel button 54a, the flow to specify the image region where the host vehicle structure appears in Fig. 4 is ended, and the processing proceeds to Step S33 in Fig. 3.

In a case where the user has selected the camera image 52c of the camera unit 13 which is a rear camera, for example, it is determined in Step S42 that camera selection has been made, and the processing moves on to Step S43. In Step S43, the control unit 26 displays a region editing screen 55a on the display unit 27 by setting parameters in the image synthesis unit 23 and the OSD superimposition unit 24.

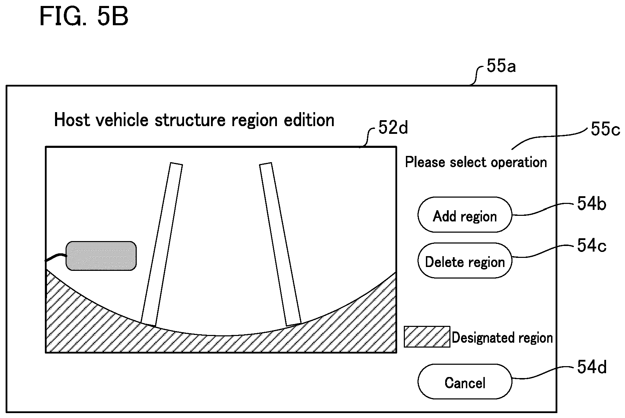

Fig. 5B is a diagram illustrating an example of the region editing screen 55a in Step S43. In Fig. 5B, 55a denotes the region editing screen displayed on the display unit 27, which displays the camera image 52d selected in Step S42, an operation guide 55c, a region addition button 54b, a region deletion button 54c, and a cancel button 54d.

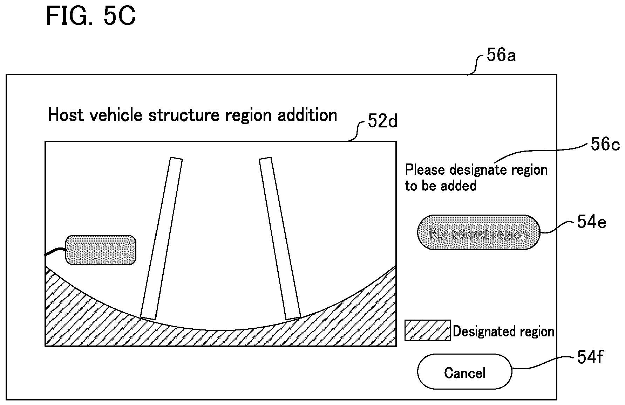

Next, in Step S44 in Fig. 4, the control unit 26 receives a user operation, if any, and determines content of the operation. If the user operates the operation unit 28 and selects any of the buttons 54b to 54d on the region editing screen 55a in Fig. 5B, the processing moves on to processing in accordance with the selection. In a case where the user selects the region addition button 54b, for example, the processing moves on to Step S45, and a region addition screen 56a in Fig. 5C is displayed.

Fig. 5C is a diagram illustrating an example of the region addition screen 56a in Step S45. In Fig. 5C, 56a denotes the region addition screen displayed on the display unit 27. In the region addition screen 56a, the camera image 52d of the camera unit 13 as a rear camera selected in Step S42, an operation guide 56c, an added region fixing button 54e, and a cancel button 54f are displayed.

Since the user has not yet designated the region to be added at this point, the added region fixing button 54e is grayed out and cannot be selected in this state.

Next, in Step S46 in Fig. 4, the control unit 26 receives a user operation, if any, and determines content of the operation. The user can designate a projecting host vehicle structure region (for example, a region where an auxiliary mirror such as a rear mirror appears) in the camera image 52d on the region addition screen 56a in Fig. 5C by operating the operation unit 28.

If the operation unit 28 is a touch panel, the user designates a region that the user desires to add by surrounding the region where the host vehicle structure appears in the camera image 52d with a finger, for example. Note that as a method of designating the region that the user desires to add, a method of designating vertex positions of the region in order using a mouse or an operation button, which is not illustrated, may be adopted.

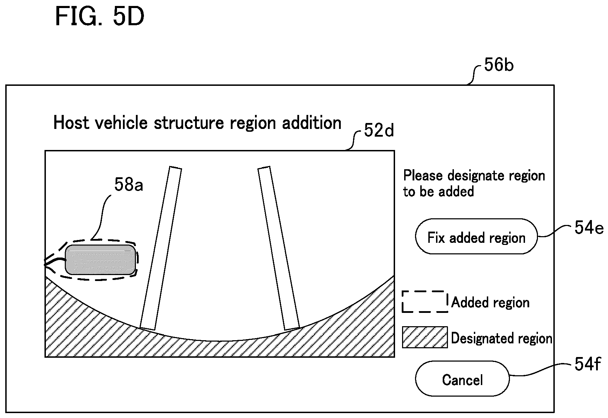

The region may have an arbitrary shape. A case where the user has operated the operation unit 28 and has designated a partial region 58a in the camera image 52d of the camera unit 13 as a rear camera will be described using Fig. 5D.

Fig. 5D is a diagram illustrating an example of the region addition screen 56b in a state where the partial region 58a in the camera image 52d has been designated. In Fig. 5D, the region 58a designated by the user is indicated by the dashed line. Note that the region 58a may not be indicated by the dashed line, and emphasized display such as blinking, for example, may be adopted as long as the designated region 58a in the camera image is displayed such that it is possible to easily recognize the position thereof by the method.

Once the user designates the region that the user desires to add, the gray-out of the added region fixing button 54e is released, and the added region fixing button 54e can be selected in this state. Once the user clicks or touches the added region fixing button 54e, it is determined in Step S46 that the region to be added has been fixed, and the processing moves on to Step S47. In Step S47, coordinates indicating the designated added region, that is, the added designated region in the camera image in which the host vehicle structure appears are added in a host vehicle structure region list, and the processing returns to Step S43.

The host vehicle structure region list may be a list with any structure and includes a host vehicle structure region ID, a camera ID, and information to specify the region in the camera image. The information to specify the region may be a set of vertex coordinates of the region in the coordinate system that normalizes x and y coordinates of the camera image to 0 to 1, for example.

If the projecting region where the host vehicle structure appears is added in Step S47, a new host vehicle structure region ID, a camera ID, and region information to specify the region in the camera image are added, in a mutually associated manner, at the last, for example, of the host vehicle structure region list.

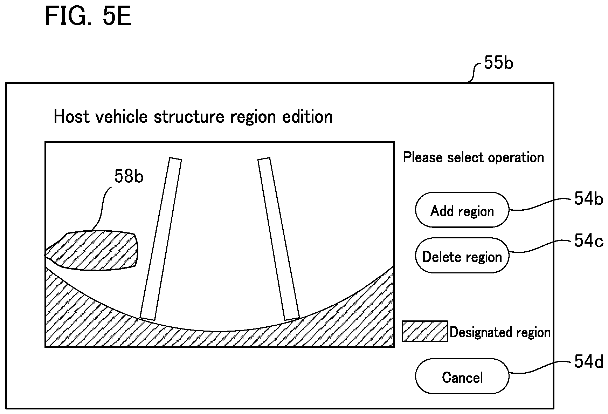

Fig. 5E is a diagram illustrating an example of the region editing screen 55b when the processing returns to Step S43 by the user selecting the added region fixing button 54e in Fig. 5D. As illustrated in Fig. 5E, since the region designated by the user in Step S46 has been added to the host vehicle structure region list, the region 58b where the rear mirror appears is displayed with hatching as a "designated region".

Note that the processing also returns to Step S43 even in a case where the user selects the cancel button 54f on the region additions screen 56b in Fig. 5D in Step S46 in Fig. 4.

In a case where the user selects the region deletion button 54c on the region editing screen 55a in Fig. 5B in Step S44 in Fig. 4, the processing moves on to Step S48, and a region deletion screen 59a is displayed.

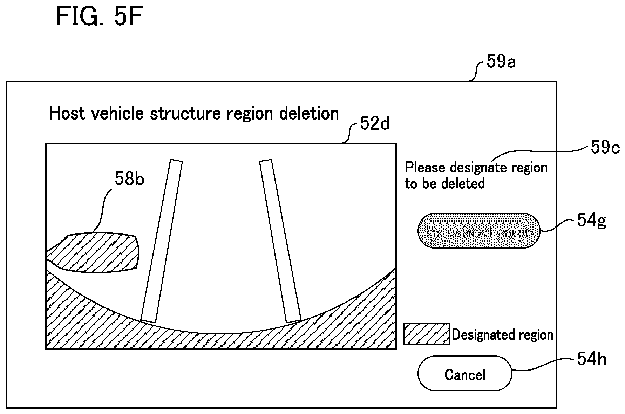

Fig. 5F is a diagram illustrating an example of the region deletion screen 59a, and 59a denotes the region deletion screen displayed on the display unit 27. In the example of the region deletion screen 59a in Fig. 5F, the camera image 52d selected in Step S42, an operation guide 59c, a deletion region fixing button 54g, and a cancel button 54h are displayed. Since the user has not yet designated a region to be deleted at this point, the deletion region fixing button 54g is grayed out and cannot be selected in this state.

Next, in Step S49 in Fig. 4, the control unit 26 receives a user operation, if any, and determines content of the operation. At this time, the user designates a region that the user desires to delete from the host vehicle structure region list from among host vehicle structure regions displayed as designated regions with hatching in the region deletion screen 59a in Fig. 5F by operating the operation unit 28.

If the operation unit 28 is a touch panel, the user can designate the region to be deleted by touching a part of the regions displayed with hatching as the designated regions. Any of the designated regions may be designated using a mouse or an operation button, which is not illustrated.

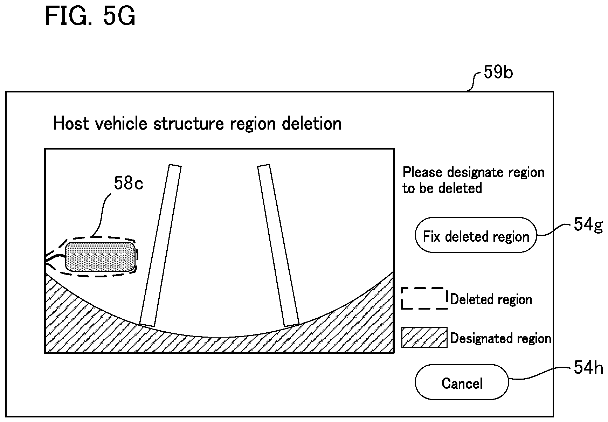

Fig. 5G is a diagram illustrating an example of the region deletion screen 59b in a state where a part of the designated regions has been selected by the user operating the operation unit 28. In Fig. 5G, a region 58c designated by the user is indicated by a dashed line.

Instead of the dashed line, any display may be adopted as long as it is possible to perform the display such that the position of the region designated in the camera image is easily recognized. For example, the region 58c designated by the user may be blinked. In this manner, the operation unit that receives an input of a user operation is included, and the projecting region is specified by the user operating the operation unit in the present embodiment.

Once the region to be deleted is designated, the gray-out of the deletion region fixing button 54g is released, and the deletion region fixing button 54g can be selected in this state as illustrated in Fig. 5G. Then, if the user clicks or touches the deletion region fixing button 54g, it is determined in Step S49 that the region to be deleted has been fixed, the processing moves on to Step S50, information corresponding to the designated region to be deleted is deleted from the host vehicle structure region list, and the processing returns to Step S43.

On the other hand, the processing also returns to Step S43 even in a case where the user clicks or touches the cancel button 54h in Fig. 5G in Step S49 in Fig. 4. In a case where the user selects the cancel button 54d in Fig. 5E in Step S44, the processing returns to Step S41.

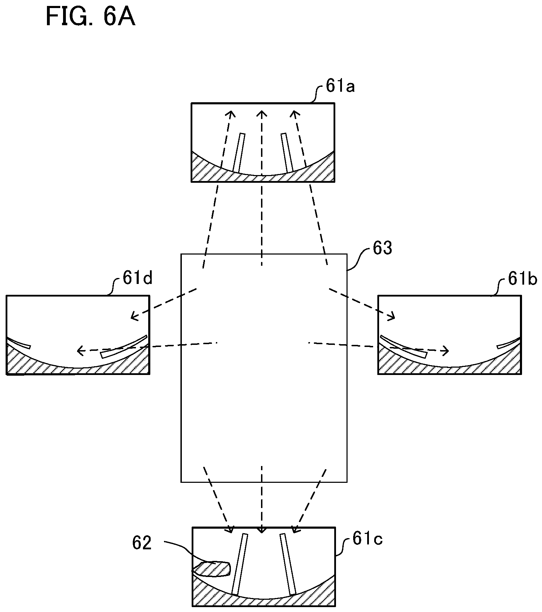

Once the processing in Fig. 4 ends, the processing moves on to Step S33 in Fig. 3, and virtual viewpoint synthesis parameters are generated. The virtual viewpoint synthesis parameters generated in Step S33 will be described using Figs. 6A to 6E. Fig. 6A is a diagram for explaining a synthesis processing example in a case where a top view image is generated as a virtual viewpoint image.

In Fig. 6A, 61a to 61d denote images (source images) that reflect the designated regions described in the host vehicle structure region list generated in Step S32 to the images corresponding to the camera units 11 to 14 after the image processing. The reference sign 62 denotes a host vehicle structure region that corresponds to the rear mirror imaged by the camera unit 13 as the rear camera and has been additionally designated by the user.

The reference sign 63 schematically illustrates, as a virtual viewpoint image, a memory region in a frame memory of m × n pixels for the virtual viewpoint image. The dashed lines each indicate which part of the source images each pixel in the virtual viewpoint image refers to. The virtual viewpoint image is obtained through projective conversion on the basis of relative positions and optical axis orientations of the camera units 11 to 14 with respect to the host vehicle and optical properties of the wide angle lenses 11b to 14b.

Since details of the projective conversion are publicly known, description thereof will be omitted. In a case where a top view image is generated as a virtual viewpoint image, for example, a pixel value of each pixel is obtained with reference to the source image 61a corresponding to the front camera unit 11 for the upper part in Fig. 6A of the virtual viewpoint image 63.

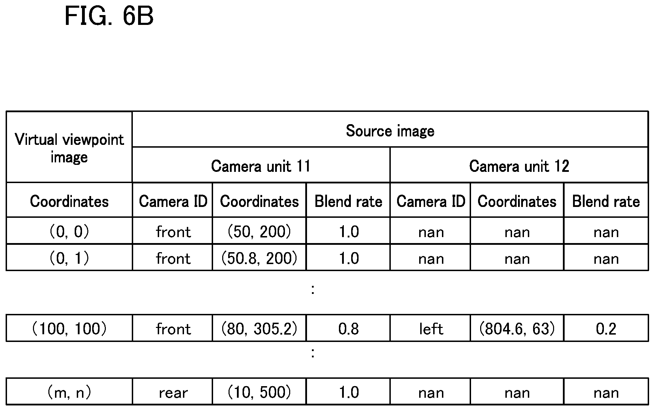

Fig. 6B is a diagram illustrating an example of virtual viewpoint synthesis parameters according to the first embodiment. The virtual viewpoint synthesis parameters are set of information indicating which pixel is to be referred to and which camera unit the pixel is included in, for each pixel of the virtual viewpoint image 63 as a result of the projective conversion.

Since coordinates of the source images in the virtual viewpoint synthesis parameters are not always integers, the image synthesis unit 23 calculates pixel values of the virtual viewpoint image by performing interpolation from pixel values of pixels in the vicinity. Since imaging ranges of the camera units 11 to 14 partially overlap each other as illustrated in Fig. 1, it is possible to refer to captured images of a plurality of camera units for the overlapping regions.

In that case, a captured image of any one of camera units may be referred to, or pixel values corresponding to two camera units may be alpha-blended (weighted addition). Selection of the camera units is determined on the basis of the resolution of each camera unit, an angle of a target region seen from the optical axis of each camera unit, and the like.

If camera units of source images are switched in regions in the vicinity of boundaries of the captured images of the plurality of camera units, seams are noticeable in the virtual viewpoint image 63. Therefore, it is possible to smooth the seams by gradually changing the blending rate in the vicinity of the boundaries. Note that there are no parameters related to the camera unit 12 for a region imaged only by the camera unit 11, for example.

Here, the virtual viewpoint synthesis parameters are generated such that the designated regions described in the host vehicle structure region list are not included in the coordinates of the source images. In other words, the virtual viewpoint synthesis parameters are generated such that the captured images of the projecting regions are not referred to when the virtual viewpoint image is not generated. For a region imaged by the plurality of camera units, a captured image of the other camera unit is employed as a source image.

In other words, in a case where a projecting region is included in a captured image from one imaging unit, it is possible to generate a virtual viewpoint image that does not include the projecting region using captured images from other imaging units corresponding to the projecting region.

If the designated region is a region imaged only by a single camera unit, past images may be held, and the past images may be referred to by calculating the amount of change in coordinates on the image in accordance with the amount of movement of the host vehicle, for example.

The amount of movement of the host vehicle can be acquired from the vehicle control unit 29. In this manner, in a case where the projecting region is included in the captured image from one imaging unit, it is possible to generate the virtual viewpoint image that does not include the projecting region with reference to the captured images in the past from the same imaging units.

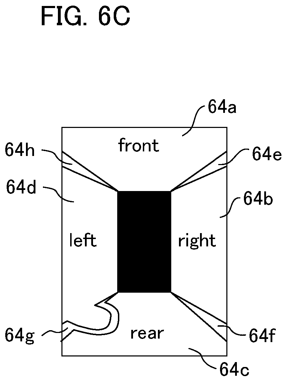

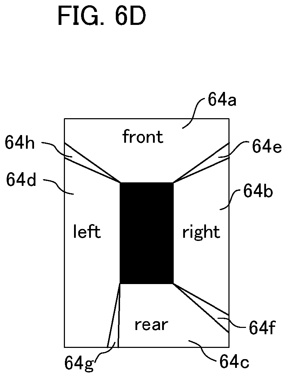

Figs. 6C and 6D schematically illustrate examples of the virtual viewpoint synthesis parameters in a case where top view virtual viewpoint images are generated using the source images 61a to 61d illustrated in Fig. 6A. The reference signs 64a to 64d denote regions where the source images 61a to 61d of a single camera unit are employed, respectively, and 64e to 64h denote overlapping regions where source images of adjacent two camera units are alpha-blended.

In other words, 64e denotes an overlapping region between the source image 61a and the source image 61b, 64f denotes an overlapping region between the source image 61b and the source image 61c, 64g denotes an overlapping region between the source image 61c and the source image 61d, and 64h denotes an overlapping region between the source image 61d and the source image 61a.

In the first embodiment, the host vehicle structure region 62 appearing in the source image 61c corresponding to the rear camera unit is not used, and the source image 61d of the left camera unit is thus employed for the region.

In other words, Fig. 6C is a diagram illustrating an example in which virtual viewpoint synthesis parameters for using a surrounding region 64g avoiding the host vehicle structure region 62 as a blended region without using the host vehicle structure region 62 in Fig. 6A as a blended region are generated. In this manner, the synthesis boundaries when the plurality of captured images are synthesized may have shapes avoiding the projecting region.

On the other hand, Fig. 6D is a diagram illustrating an example in which virtual viewpoint synthesis parameters for leaving a boundary of blended regions as straight lines and not using the host vehicle structure region 62 are generated. The region displayed with a black color at the center is a region that is not captured in any of the source images 61a to 61d, and the host vehicle icon is displayed here in a superimposed manner. In this manner, the synthesis boundaries when the plurality of captured images are synthesized may be straight lines.

In Step S34 in Fig. 3, the control unit 26 sets the virtual viewpoint synthesis parameters generated in Step S33 in the image synthesis unit 23. The image synthesis unit 23 synthesizes the source images in accordance with the set virtual viewpoint synthesis parameters and generates a synthesized image from the virtual viewpoint.

Here, Step S34 functions as a virtual viewpoint image generation step of generating the virtual viewpoint image on the basis of the plurality of captured images from the plurality of imaging units mounted in the movable apparatus. Also, in Step S34 as the virtual viewpoint image generation step, the virtual viewpoint image is generated such that the projecting region specified in the specification step is not included therein.

Then, whether or not there has been a change in the host vehicle state (the position, for example) is determined in Step S35, Step S35 is repeated if there has not been a change, and the processing moves on to Step S36 if there has been a change. The virtual viewpoint is changed in accordance with a change in position, for example, in Step S36, and the processing moves on to Step S37. Whether or not virtual viewpoint synthesis parameters have already been generated is determined in Step S37, the processing returns to Step S34, or if the virtual viewpoint synthesis parameters have not been generated, the processing returns to Step S33.

The OSD superimposition unit 24 generates a virtual viewpoint image by superimposing the host vehicle icon on the synthesized image and displays the virtual viewpoint image on the display unit 27.

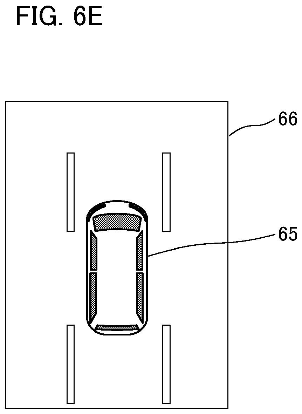

Fig. 6E is a diagram illustrating an example of the virtual viewpoint image 66 generated by the OSD superimposition unit 24. In Fig. 6E, 65 denotes the host vehicle icon. An unnatural image due to a host vehicle structure such as a rear mirror (auxiliary mirror) is not generated in the virtual viewpoint image 66 by the user additionally registering the region where the rear mirror appears in the host vehicle structure region list.

Note that in the above description, the example in which the processing (Step S32 in Fig. 3) of specifying image regions where host vehicle structures appear is performed every time the image processing system 20 is activated has been described. However, the host vehicle structure region list saved in the memory 25 may be read and employed if there has been no change in installation of the host vehicle structures.

In that case, it is only necessary that the user be able to call the flow in Fig. 3 to specify image regions where host vehicle structures appear through a UI such as a menu when there has been a change in installation of the host vehicle structures. Alternatively, a time-out period may be set for the processing of specifying the image regions where the host vehicle structures appear, and the flow in Fig. 3 may be ended if there is no user operation after activation of the image processing system 20.

In this manner, since images of structures projecting from the host vehicle are not synthesized at unnatural positions in the virtual viewpoint image in the first embodiment, it is possible to generate the virtual viewpoint image such that the drive does not erroneously recognize the structures as obstacles.

### <Second embodiment>

Although the user individually designates host vehicle structure regions by operating the operation unit 28 in the first embodiment, a plurality of captured images are analyzed to determine host vehicle structure regions by a user providing an instruction in an environment where there are no three-dimensional objects in the surroundings of a host vehicle in the second embodiment.

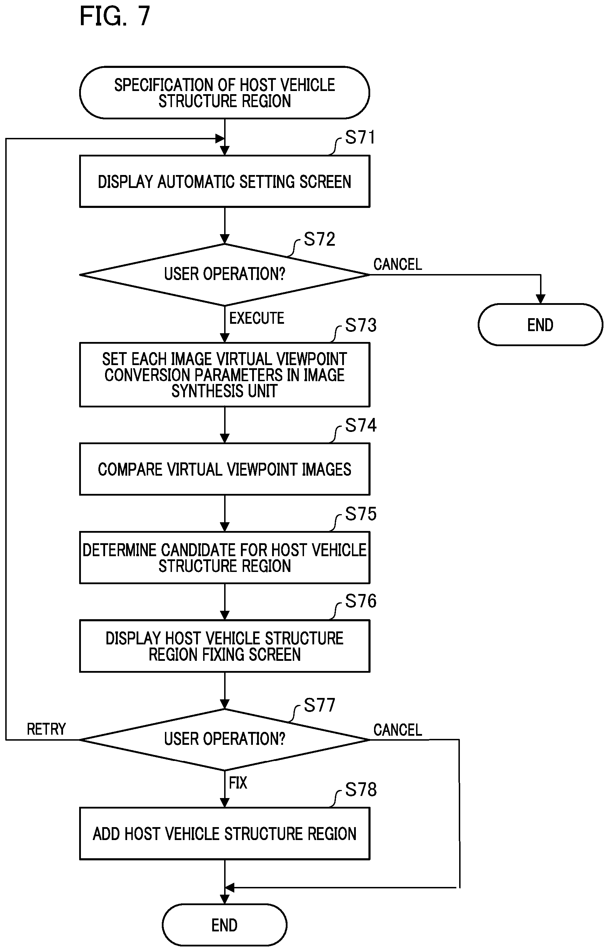

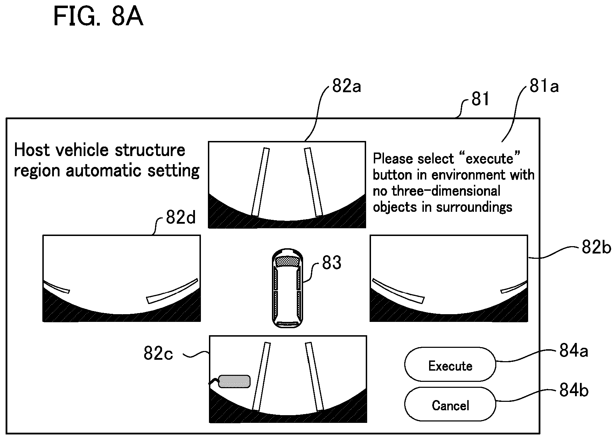

Disposition of camera units, a configuration of an image processing system, a processing flow, and the like in the second embodiment are substantially similar to those of the vehicle described in Figs. 1 to 3 in the first embodiment, and description of the same parts will be omitted. Details of processing in Step S32 in Fig. 3 in the second embodiment are different from those in the first embodiment, and differences will be described using Figs. 7 and 8A to 8E.

Fig. 7 is a flowchart for explaining a processing example of specifying an image region where a host vehicle structure appears according to the second embodiment. Note that an operation in each step in the flowchart in Fig. 7 is performed in order by a CPU or the like as a computer in a control unit 26 executing a computer program stored in a memory.

In Step S71 in Fig. 7, the control unit 26 displays an automatic setting screen as illustrated in Fig. 8A on a display unit 27 by setting parameters in an image synthesis unit 23 and an OSD superimposition unit 24.

Fig. 8A is a diagram illustrating an example of an automatic setting screen 81 according to the second embodiment, and the automatic setting screen 81 is displayed on the display unit 27. The reference signs 82a to 82d denote images obtained by performing image processing on images corresponding to camera units 11 to 14 and resizing the images, and the images are arranged on front, right, rear, and left sides of a host vehicle icon 83 in accordance with disposition of the camera units 11 to 14. Also, an operation guide 81a, an execution button 84a, and a cancel button 84b are displayed in the automatic setting screen 81.

Next, in Step S72 in Fig. 7, the control unit 26 receives a user operation, if any, and determines content of the operation. Once the user selects the execution button 84a in Fig. 8A by operating an operation unit 28, the processing moves on to Step S73. On the other hand, in a case where the user selects the cancel button 84b, the processing of specifying an image region where a host vehicle structure appears is stopped, and the processing returns to the flow in Fig. 3 and then proceeds to Step S33.

In Step S73 in Fig. 7, the control unit 26 generates virtual viewpoint conversion parameters to convert captured images of the camera units 11 to 14 into virtual viewpoint images from the same viewpoint and sets the virtual viewpoint conversion parameters in the image synthesis unit 23.

Although the virtual viewpoint conversion parameters are the same concept as the virtual viewpoint synthesis parameters, the virtual viewpoint conversion parameters are parameters to convert source images into individual virtual viewpoint images instead of synthesizing the plurality of source images into one virtual viewpoint image.

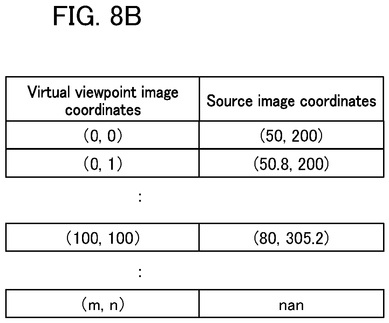

Fig. 8B is a diagram illustrating an example of virtual viewpoint conversion parameters for a top view corresponding to the front camera unit 11 and illustrates a relationship between virtual viewpoint image coordinates and source image coordinates. Since the lateral sides and the rear sides of the host vehicle do not appear in the front camera unit 11, the source image coordinates corresponding to coordinates (for example, coordinates (m, n)) on the lateral sides and the rear sides of the virtual viewpoint image are represented as "nan".

Virtual viewpoint conversion parameters corresponding to the right, rear, and left camera units 12 to 14 are generated similarly to Fig. 8B and are set in the image synthesis unit 23.

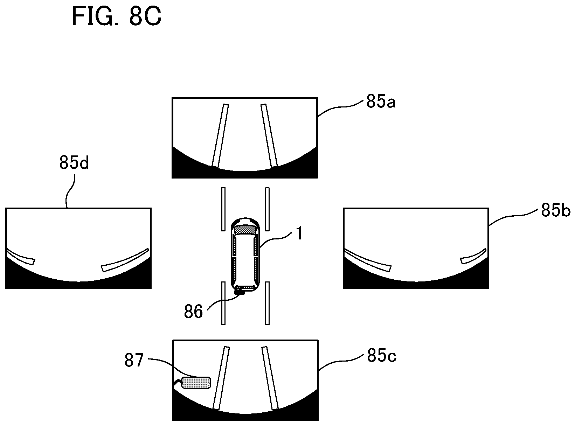

Fig. 8C is a diagram illustrating a top view of the vehicle 1 and images 85a to 85d after image processing is performed on the images corresponding to the camera units 11 to 14. A rear mirror 86 appears as an image 87 in the image 85c after performing image processing on the rear image.

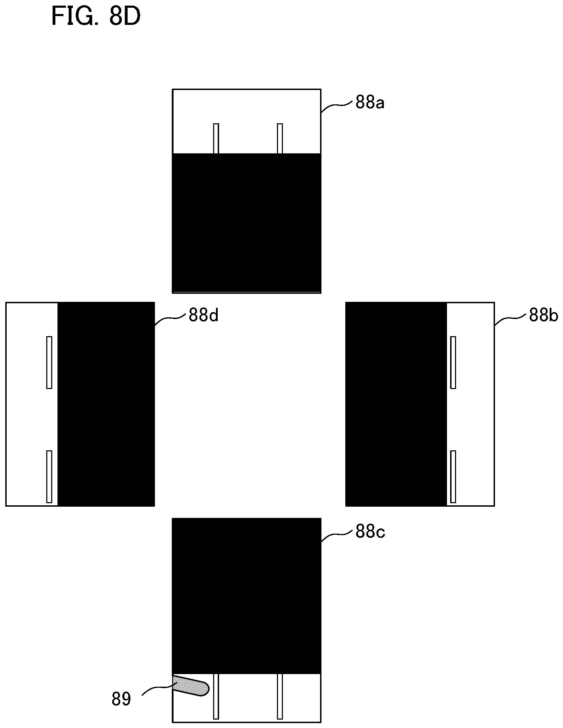

Fig. 8D is a diagram illustrating an example of virtual viewpoint images 88a to 88d that the image synthesis unit 23 has generated on the basis of the virtual viewpoint conversion parameters set in Step S73 using the images 85a to 85d after the image processing as inputs and has saved in the memory 25.

Regions that are not imaged by the camera units (the regions where the source image coordinates of the virtual viewpoint conversion parameters are "nan" as in Fig. 8B) are illustrated with a black color. The image 89 of the rear mirror 86 appears in the rear virtual viewpoint image 88c.

In Step S74 in Fig. 7, the control unit 26 reads the virtual viewpoint images corresponding to the camera units 11 to 14 from the memory 25, compares the virtual viewpoint images at the same coordinates, and detects regions with significant differences. Regions that are not imaged by the camera units are not targets of the comparison. It is possible to detect projecting regions by converting the plurality of captured images into virtual viewpoint images and comparing the virtual viewpoint images in this manner.

In the example illustrated in Fig. 8D, there is a significant difference in region of the image 89 of the rear mirror between the rear virtual viewpoint image 88c and the left virtual viewpoint image 88d in the comparison of the four virtual viewpoint images 88a to 88d at the same coordinates.

In Step S75 in Fig. 7, the control unit 26 determines that the region of the image 89 of the rear mirror appearing in the rear virtual viewpoint image 88c is a candidate region which is a candidate for a host vehicle structure region, in consideration of continuity with the surrounding region and the like. Then, in Step S76, the control unit 26 displays a host vehicle structure region checking screen on the display unit 27.

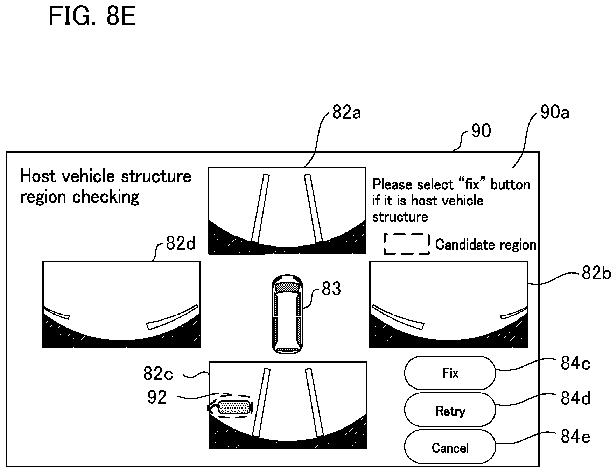

Fig. 8E is a diagram illustrating an example of a host vehicle structure region checking screen 90 displayed in Step S76, and the same components as those in Fig. 8A will be denoted by the same reference signs. Also, an operation guide 90a, a fixing button 84c, a retry button 84d, and a cancel button 84e are displayed on the host vehicle structure region checking screen 90. Also, the region of the rear mirror is displayed as a candidate region 92 to be added as a host vehicle structure region.

Next, in Step S77 in Fig. 7, the control unit 26 receives a user operation, if any, and determines content of the operation. If the user selects the fixing button 84c by operating the operation unit 28, the processing moves on to Step S78, the candidate region 92 is added to the host vehicle structure region list, and the processing proceeds to Step S33 in Fig. 3.

Once the user selects the retry button 84d, the candidate region is discarded, and the processing returns to Step S71. In a case where the user selects the cancel button 84e, the flow in Fig. 7 to specify the image region where the host vehicle structure appears is ended, and the processing proceeds to Step S33 in Fig. 3. The following processing is similar to that in the first embodiment.

Note that although the example in which the number of host vehicle structures is one has been used in the above description, it is also possible to specify host vehicle structures in processing performed once even in a case where there are a plurality of host vehicle structures. In this manner, it is possible to specify structures projecting from the host vehicles if the user does not directly designate host vehicle structure regions on the screen, and to generate a virtual viewpoint image from which the driver does not erroneously recognize images of the host vehicle structures as obstacles, in the second embodiment.

### <Third embodiment>

In a third embodiment, a plurality of captured images are acquired from camera units during traveling of a host vehicle, and host vehicle structure regions are determined by analyzing the captured images. Although regions where a surrounding environment appears change in the captured images due to the traveling of the host vehicle, regions where the host vehicle structures appear do not change, and the regions that do not change are thus specified as the host vehicle structure regions through comparison with captured images of the same camera units in the past.

In the third embodiment, disposition of camera units, a configuration of an image processing system, and a processing flow are substantially similar to those of the vehicle described in Figs. 1 to 3 in the first embodiment, and description of the same parts will thus be omitted. In the third embodiment, details in Step S32 in Fig. 3 are different from those in the first embodiment and the second embodiment.

In Step S32 in Fig. 3, the control unit 26 acquires a traveling state of the host vehicle from a vehicle control unit 29 and acquires images after performing image processing on images before and after movement corresponding to camera units 11 to 14. The images after the image processing are stored once in a memory 25 without being subjected to virtual viewpoint conversion processing via an image synthesis unit 23.

The control unit 26 reads the images after performing the image processing before and after the movement of the camera units from the memory 25, compares the images at the same coordinates, and extracts regions that have no changes due to the movement. In this manner, projecting regions may be detected by comparing the captured images before and movement of the movable apparatus. Note that since there are changes in brightness and colors even in the host vehicle structures due to weathers and illumination, it is preferable to compare the shapes using a known technique such as edge detection.

Since the shapes appearing in the images slightly change due to vibration and the like, it is preferable to make determination on the basis of threshold values using overlapping rates or the like of the shapes. Then, regions for which it is determined that there have been no changes are added to a host vehicle structure list. The following processing is similar to that in the first embodiment.

In this manner, since it is possible to specify structures projecting from the host vehicle even in a state where there are three-dimensional objects in the surrounding environment without requiring a user operation and to thereby generate a virtual viewpoint image from which a driver does not erroneously recognize images of the host vehicle structures as obstacles in the third embodiment.

While the present invention has been described with reference to embodiments, it is to be understood that the invention is not limited to the disclosed embodiments but is defined by the scope of the following claims.

In addition, as a part or the whole of the control according to the embodiments, a computer program realizing the function of the embodiments described above may be supplied to the image processing apparatus or the like through a network or various storage media. Then, a computer (or a CPU, an MPU, or the like) of the image processing apparatus or the like may be configured to read and execute the program. In such a case, the program and the storage medium storing the program configure the present invention.

In addition, the present invention includes those realized using at least one processor or circuit configured to perform functions of the embodiments explained above. For example, a plurality of processors may be used for distribution processing to perform functions of the embodiments explained above.

## Claims

1. An image processing apparatus comprising:
a virtual viewpoint image generation unit (23) configured to generate a virtual viewpoint image on the basis of a plurality of captured images from a plurality of imaging units (11, 12, 13, 14) mounted on a movable apparatus (1), and
a specification unit (26) configured to specify, as a projecting region, a region where a structure projecting from the movable apparatus has been imaged in the captured images,
wherein the virtual viewpoint image generation unit (23) is configured to generate the virtual viewpoint image such that the projecting region specified by the specification unit is not included therein.

2. The image processing apparatus according to claim 1, wherein the virtual viewpoint image generation unit (23) is configured to generate virtual viewpoint synthesis parameters such that the captured images of the projecting region are not referred to when the virtual viewpoint image is generated.

3. The image processing apparatus according to claim 1 or 2, wherein the virtual viewpoint image generation unit (23) is configured to, in a case where the projecting region is included in the captured image from one of the imaging units (11, 12, 13, 14), generate the virtual viewpoint image that does not include the projecting region by using the captured image from another imaging unit corresponding to the projecting region.

4. The image processing apparatus according to any one of claims 1 to 3, wherein the virtual viewpoint image generation unit (23) is configured to, in a case where the projecting region is included in the captured image from one of the imaging units, generate the virtual viewpoint image that does not include the projecting region with reference to the captured image in the past from the same imaging unit.

5. The image processing apparatus according to any one of claims 1 to 4, wherein the virtual viewpoint image generation unit (23) is configured to synthesize the plurality of captured images such that synthesis boundaries are straight lines.

6. The image processing apparatus according to any one of claims 1 to 5, wherein the virtual viewpoint image generation unit (23) is configured to synthesize the plurality of captured images such that synthesis boundaries have a shape avoiding the projecting region.

7. The image processing apparatus according to any one of claims 1 to 6, further comprising:
an operation unit (28) configured to receive an input of a user operation, and
wherein the projecting region is specified by a user operating the operation unit.

8. The image processing apparatus according to any one of claims 1 to 7, wherein the specification unit (26) configured to detect the projecting region by converting the plurality of captured images into virtual viewpoint images and comparing the virtual viewpoint images.

9. The image processing apparatus according to any one of claims 1 to 8, wherein the specification unit (26) is configured to detect the projecting region by comparing the captured images before and after movement of the movable apparatus.

10. An image processing method comprising:
generating a virtual viewpoint image on the basis of a plurality of captured images from a plurality of imaging units mounted on a movable apparatus;
specifying, as a projecting region, a region where a structure projecting from the movable apparatus has been imaged in the captured images; and
generating the virtual viewpoint image such that the projecting region is not included when the virtual viewpoint image is generated.

11. A non-transitory computer-readable storage medium having instructions stored thereon for executing the method of claim 11.
